# EUROPEAN PATENT APPLICATION

(11) **EP 4 752 337 A1**
(43) Date of publication of application: **03.06.2026**
(21) Application number: 25219150.7
(22) Date of filing: 27.11.2025
(51) Int. Cl.: F01N 3/021, F01N 3/10, F01N 3/20, F01N 3/28, F01N 13/00

(54) **POLLUTANT REDUCTION SYSTEM FOR COMPRESSION IGNITION ENGINES**

(30) Priority: 27.11.2024 IT 202400026850
(71) Applicant: CNH Industrial Italia S.p.A., 10156 Torino (IT)
(72) Inventor: D'epiro, Clino, 10156 Turin (IT)
(74) Representative: CNH Industrial IP Department

(57) **Abstract**

Pollutant abatement system (ATS) produced comprising in succession, from an exhaust gas inlet point (IN) and an outlet point (Out) of purified exhaust gas, a first SCR selective reduction catalyst (SCR_1), a diesel oxidation catalyst (DOC), a particulate filter (DPF), a second SCR (SCR_2), connection means (DV1, V2, V3, L1, L3a, L3b) configured to bypass the first SCR (SCR_1).

## Description

### Field of the invention

The present invention relates to the field of pollutant abatement systems for self-ignition engines, i.e. compression ignition engines, such as preferably Diesel engines.

### State of the art

Regulations on atmospheric emissions of pollutants produced by motor vehicles are becoming increasingly restrictive.

The term particulate matter (PM) identifies the set of particles of solid or liquid particles suspended in the air. The most recent regulations include the counting of the Particulate number (PN) which includes solid particles in the range 500-23 nanometers and, in the future, it is expected to be extended up to 10 nanometers.

The PN also includes solid particles potentially generated by the injection of AdBlue and the incomplete decomposition of urea.

An exhaust gas post-treatment system (ATS) generally includes, starting from the internal combustion engine, a DOC (Diesel oxidation catalyst), a DPF (Diesel particulate filter), an SCR (Selective catalytic reduction) and a CUC (Clean-up Catalyst).

The DOC is a catalytic converter designed specifically for diesel engines and equipment to reduce emissions of carbon monoxide (CO), hydrocarbons (HC) and particulate matter (PM).

The DPF is a closed filter that has the dual task of accumulating particulate matter and burning it. The elimination of particulate matter can occur naturally with the help of NOx, NO2 in particular, at temperatures above 250°C. When the accumulation of particulate matter exceeds a predetermined threshold, a forced regeneration procedure is started which aims to raise the temperature of the DPF triggering a sudden combustion of the accumulated particulate matter.

The SCR is a catalyst whose walls are loaded with zeolites, which are able to convert NOx into N2 and H2O with the help of the injection of a liquid solution that is a precursor of ammonia.

Downstream of the SCR, a so-called CUC is generally placed, i.e. a catalyst whose walls are loaded with noble metals and zeolites to neutralize the excess ammonia that is released by the SCR. The CUC is called in different ways, for example "ammonia slip catalyst" (ASC) or "ammonia guard catalyst" (AGC) .

One of the most felt problems is the cold heating of the SCR.

In fact, until the SCR reaches a minimum operating temperature, it is not able to carry out its task.

An ATS scheme equipped with two SCRs has become widespread, of which a first SCR is placed as the first component of the ATS, so that the additional devices, such as DOC, DPF, etc., do not slow down, with their thermal inertia, its rapid heating.

However, this SCR has sizing limitations, because the requirements of
- reduced mass to activate quickly when cold and
- reduced pressure drop
are mutually conflicting.

In fact, it must be kept in mind that the back pressure generated by the entire ATS has an impact on fuel consumption.

It is important to remember the following concept: smaller size of an ATS component implies a proportionally lower thermal inertia, but a proportionally higher pressure drop.

For this reason, the prior art provides for a first SCR of small dimensions and therefore low thermal inertia and a second SCR arranged downstream of the particulate filter according to the SCR, DOC/MOC (Methane Oxidation Catalyst), DPF, SCR scheme, starting from the first component encountered by the exhaust gases.

The second SCR is activated alternatively to the first SCR after the second SCR has reached operating temperature.

The second SCR is sized so as to be able to reduce the NOx contained in the exhaust gases at full load.

Furthermore, in consideration of the additional pressure drop increase offered by the first SCR, the second SCR must be larger than a single SCR scheme, to compensate for the additional pressure drops offered by the first SCR.

Unless specifically excluded in the detailed description that follows, the description in this chapter is to be considered as an integral part of the detailed description.

### Summary of the invention

The purpose of the present invention is to propose a pollutant abatement system configured to ensure good performance in all operating conditions.

The basic idea of the present invention is to implement a double SCR scheme with the first SCR bypassed, by means of a valve group, after the second SCR is operational. This fact allows the first SCR to be sized without limitations on the relative pressure drops, therefore, it can be smaller than the second SCR.

Advantageously, during engine warm-up, the pressure drops offered by the ATS lead more easily to a conversion of the enthalpy into heat useful for heating the ATS.

According to a preferred aspect of the invention, the first SCR can be arranged, thanks to the valve group, in parallel with the remaining ATS, so as to reduce the pressure drops when the engine is at full load.

Advantageously, at the same maximum back pressure compared to an ATS equipped with a single SCR, the present solution allows the size of the second SCR to be reduced and therefore facilitate its heating.

The dependent claims describe preferred variants of the invention, forming an integral part of the present specification.

### Brief description of the figures

Further objects and advantages of the present invention will be apparent from the following detailed description of an embodiment thereof (and variations thereof) and the accompanying drawings given purely for explanatory and non-limiting purposes, in which:
- Figure 1 shows a hardware diagram of an ATS according to the present invention;
- Figures 2 - 4 show possible operating conditions of the diagram of Figure 1;
- Figures 5 - 7 respectively show the same operating conditions as Figures 2 - 4 by means of a preferred example of hardware embodiment.

The same reference numbers and letters in the figures identify the same elements or components or functions.

The dashed blocks are to be considered completely optional. It should also be noted that the terms "first", "second", "third", "upper", "lower" and the like may be used herein to distinguish various elements. These terms do not imply a spatial, sequential or hierarchical order for the modified elements unless specifically indicated or inferred from the text.

The elements and features illustrated in the various preferred embodiments, including the drawings, may be combined with each other without departing from the scope of protection of the present application as described below.

### Detailed description

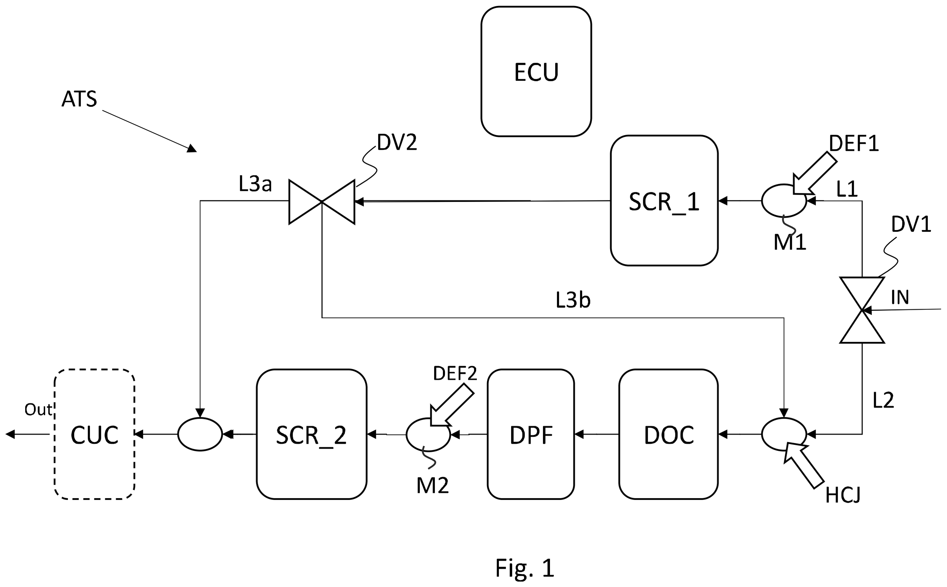

Figure 1 shows a hardware diagram of an ATS according to the present invention.

The exhaust gas is introduced at the DV1 valve and indicated by the "IN" label.

The valve DV1 is a diverter valve, capable of directing the exhaust gas to two different lines indicated as the first line L1 and the second line L2.

As will be seen later, it is not of the ON/OFF type, but preferably proportional.

The first line L1 is operationally connected to a first SCR, indicated as SCR_1.

The second line L2 is operationally connected to a succession of components, including a diesel catalyst DOC, a particulate filter DPF and a second SCR, indicated as SCR_2. The output of the first SCR is operationally connected to a second diverter valve DV2, operationally connected to two different lines, indicated as the third line L3a and the fourth line L3b.

The term "line", according to this description, indicates a pneumatic duct arranged to convey exhaust gas between a point upstream and a relative point downstream of the ATS according to a direction of flow of the exhaust gases from the exhaust manifold of a compression ignition engine (not shown) and the outside, indicated as "Out".

The third line L3a is arranged to connect the outlet of the first SCR with the outside.

The fourth line L3b is arranged to connect the outlet of the first SCR with a point immediately upstream of the succession of the DOC, DPF and SCR_2 components.

The selection of the third or fourth line is operated by the second valve, which can be of the ON/OFF or proportional type.

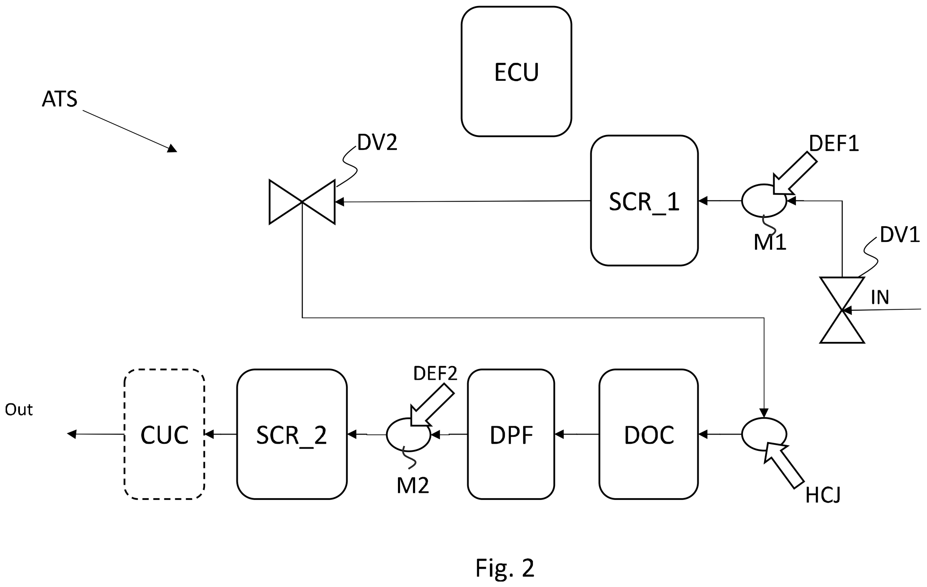

Figures 2 - 4 show the same device of figure 1 in different functional conditions, in relation to the configurations operable with the first and second diverter valves DV1 and DV2.

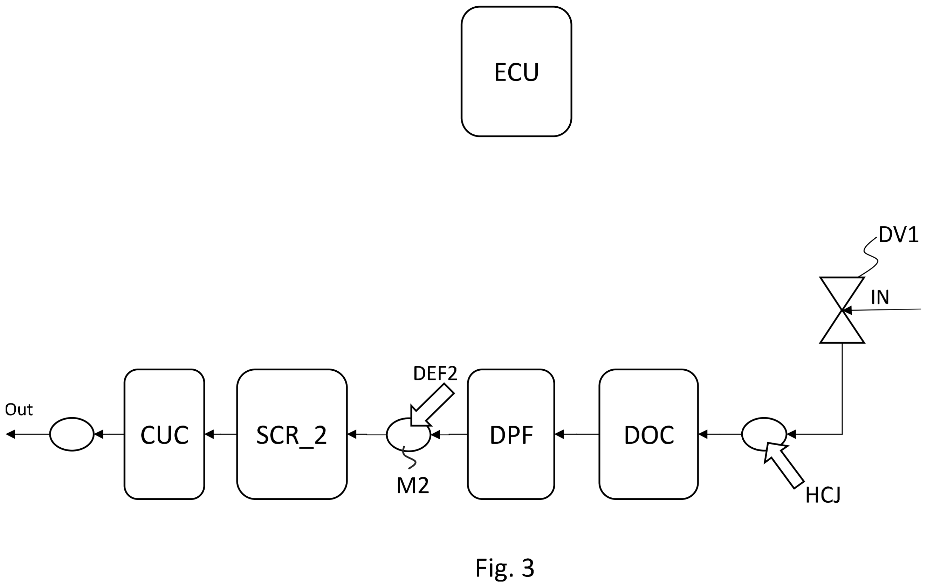

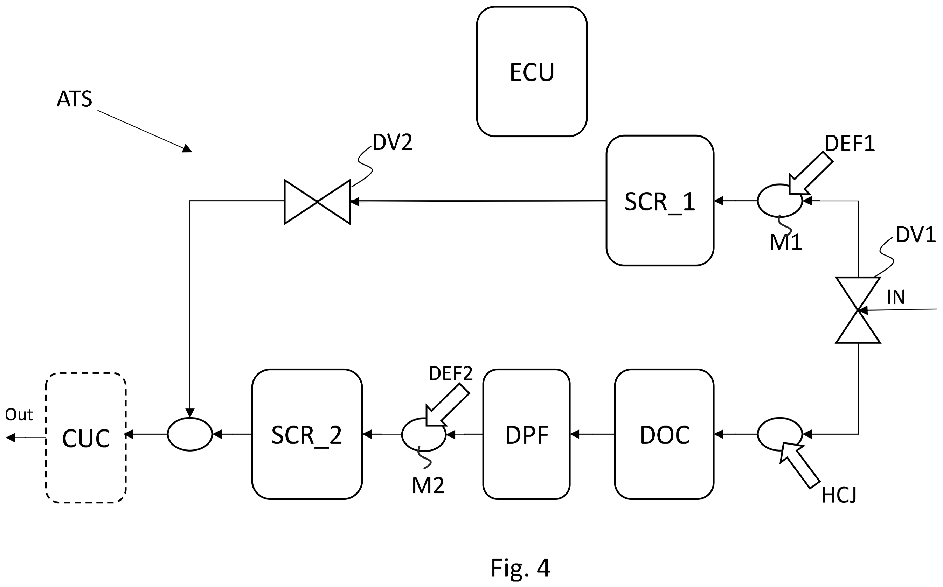

Therefore, the second line L2 and the third line L3a, in figure 2, are not represented only because the valve DV1 is arranged to entirely convey the exhaust gas through the first line L1 and the valve DV2 is configured to entirely convey the exhaust gas through the fourth line L3b. Similarly, in figure 3, the first line L1 with the first SCR and the second valve DV2 are not represented because the valve DV1 is configured to entirely convey the exhaust gas through the second line L2, thus bypassing the first SCR. Furthermore, in figure 4, the fourth line L3b is not shown, since the exhaust gas is introduced, in parallel, on both the first and second lines L1 and L2.

Following the analysis of figures 2 - 4, it is understood that the first SCR, SCR_1, can be
- connected in series to the line L2 comprising the succession of components indicated above,
- bypassed,
- connected in parallel to the line L2 comprising the succession of components indicated above.

Both the first SCR, SCR_1, and the second SCR, SCR_2, are equipped with respective injection devices DEF1, DEF2 of urea-based reducing agent, configured to inject the agent into a respective mixer M1, M2, known in themselves, located immediately upstream of the respective SCRs.

"immediately" means that there are no further components interposed therebetween, for example, the first mixer M1 and the respective first SCR, SCR_1.

Preferably, the second line L2 also comprises a fuel injector HCJ arranged as the first component, i.e. immediately upstream of the DOC.

This injector may be used to facilitate forced regeneration of the DPF.

Preferably, an oxidation catalyst CUC arranged downstream of the first and second SCR is arranged to oxidize any excess ammonia that escapes the SCR.

It is understood that the CUC, shown in the drawings as aligned with the second line L2, is actually arranged downstream of both the first and second lines, immediately before the gases reach the external environment.

### Operating logic

According to a preferred aspect of the invention, when the engine is cold, the valve DV1 is configured to divert the entire flow of exhaust gas onto the first line L1, so as to exploit the small size of the first SCR, which tends to heat up and become operational quickly, being the first component encountered by the exhaust gases and having a small volume, smaller than the second SCR.

Advantageously, when the engine is cold, the combustion engine is limited to operating at low rotation speed, therefore, the small size of the first SCR does not represent a limitation in terms of back pressure, but rather an advantage, since a flap on the exhaust duct is generally used to increase the back pressure and promote cold heating of the ATS.

When the first SCR is judged operational, by means of an appropriate temperature sensor (not shown), the first injector DEF1 is activated.

The exhaust gases leaving the first SCR are conveyed upstream of the second line in order to allow the heating of the related components DOC, DPF, second SCR, SCR_2.

In this operating condition, the second DEF2 injector is deactivated.

When the temperature in the second SCR, measured by a suitable temperature sensor (not shown), is judged to be operational, then the second injector is activated and at the same time, the first SCR, SCR_1, is bypassed by the DV1 valve which is controlled to divert the entire flow of exhaust gas to the second line.

In accordance with figure 3, the first line L1 is not shown because it is not crossed by exhaust gases.

When the second SCR is judged to be operational, then from the configuration of figure 3 it is possible to move to the configuration of figure 4, in which the first line L1 and the second line L2 operate in parallel.

This configuration of figure 4 is activated when the rotation speed of the prime mover exceeds a predetermined threshold. In other words, when the flow of exhaust gases generated by the prime mover exceeds a predetermined threshold.

To ensure pollutant conversion efficiency within the components of the second line L2 that

Based on the construction characteristics of the first SCR and all the components of the second line, the first line can offer a lower pressure drop than the second line L2.

In this case, the DV1 valve is preferably proportional, allowing the distribution of the exhaust gas flow rates between the first and second lines to be controlled.

In any case, the first line L1, when the aforementioned exhaust gas flow threshold is exceeded, must complement the second line, allowing the second line to remain within the design space/velocity limits.

The second line can be sized to adequately manage, for example, 90% of the maximum exhaust gas flow value produced by the engine at maximum rotation speed.

Advantageously, the remaining 10% of this maximum value can be diverted to the first line, which therefore contributes to the reduction of pollutants even when the second line is fully operational.

Therefore, the components of the second line can be smaller and lighter than the components of a traditional ATS, sized to treat 100% of the exhaust gases produced by the prime mover.

However, if the parallel of the first line and the second line are sized to treat more than 100% of the exhaust gases produced by the prime mover, for example 120%, then, the operation of the first line, in parallel with the second line, allows to reduce the back pressure and therefore improve the efficiency of the turbocharger located between the exhaust manifold and the ATS.

Evidently, also the turbocharger can be sized taking into account the reduced back pressure offered by the ATS, avoiding a premature intervention of the waste-gate valve. For example, a heavy-duty engine, subjected to a maximum boost of 3.25 bar, has an expansion beta on the turbine that can exceed 4.5. This means that every 100 mbar of increased pressure drop on the ATS translates into 450 mbar, 0.45 bar, of increased back pressure to the engine.

Advantageously, a reduction in back pressure not only leads to a reduction in fuel consumption but also a reduction in the average temperature of the exhaust gases passing through the ATS, with an improvement in system reliability.

In known schemes, the first SCR is titanium-vanadium based. This type of SCR has the characteristic of activating at low temperatures and of functioning well even with a NO/NO2 ratio far from the optimal 50%. However, at high temperatures and in particular, when the engine produces 100% of the maximum flow of exhaust gas, the SCR, due to thermal stress, degrade until it loses its functionality. Advantageously, the possibility of bypassing the first SCR allows the implementation of an SCR with a titanium-vanadium based coating matrix, improving the overall performance of the ATS in terms of efficiency in all operating conditions and durability.

The reduction of the back pressure leads to a reduction of the operating temperature, especially at the maximum rotation speed of the prime mover, therefore, the activation of the first titanium-vanadium based SCR, in parallel to the second line, does not lead to the functional degradation of the first SCR.

In other words, when the parallel of the first and second lines allows to treat a flow of exhaust gas greater, for example 10% and more preferably 20%, than the maximum flow of exhaust gas produced by the engine, then, the first SCR can be of the titanium-vanadium type.

Preferably, a total volume given by the sum of the first and second SCRs is greater than or equal to a nominal volume -calculated to purify a nominal flow of exhaust gases entering the abatement system and is preferably less than 120% of the calculated nominal volume.

According to a preferred aspect of the invention, when the first SCR has exceeded its activation temperature, e.g. 220 °C, the first urea-based reducing agent injector DEF1 may activate, injecting the urea-based reducing agent into the first mixer M1. The first mixer and the first injector are arranged immediately upstream of the first SCR.

If an increase in the engine load is expected with an exhaust gas flow that exceeds the back pressure capacity of the ATS with the first and second lines arranged in series, then the fuel injector HCJ, arranged immediately upstream of the second line, i.e. upstream of the DOC, is activated to promote rapid heating of the second SCR and to support hydrolysis of the urea-based reducing agent injector DEF2 arranged to inject urea-based reducing agent into the second mixer M2, arranged immediately upstream of the second SCR. Otherwise, if an increase in engine load is not expected, the HCJ injector is kept off.

When the temperature of the second SCR is such that the second SCR is considered fully operational, then the first SCR is bypassed.

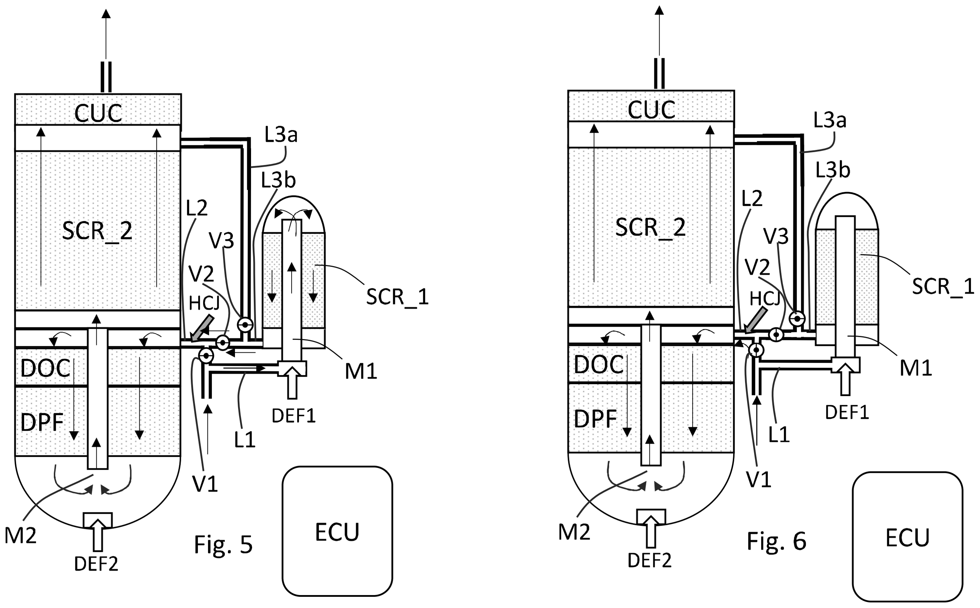

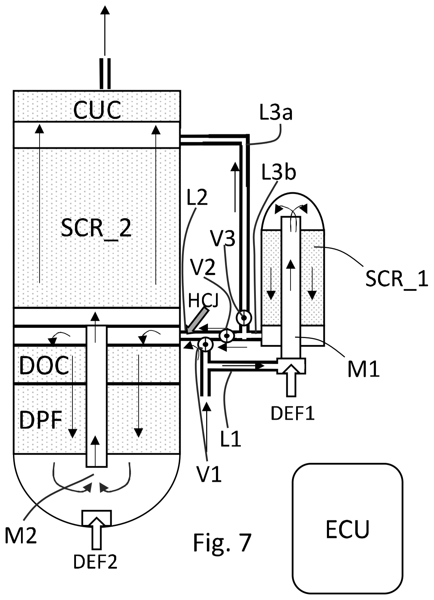

If the first SCR is kept off for a long time, as the engine load is medium-low, the temperature of the first SCR can drop below its activation temperature. For this purpose, a strategy can be envisaged that involves connecting the first SCR in parallel to the second line, introducing into it a residual flow of exhaust gas, for example 30% of the maximum flow capable of handling the first SCR, to maintain it warm. When the load is medium-high, the first SCR is connected in parallel to the second line, to complement it, treating the maximum flow of exhaust gas that the first SCR can handle. Figures 5 - 7 show an example of how the first and second lines L1, L2 can be implemented.

First, it is noted that at least one of the two SCRs is oriented upwards, in the sense that it, when in operating conditions, imposes a vertical movement from the bottom to the top on the exhausted gas flow. This fact is advantageous, since the urea-based reducing agent is sprayed from the bottom to the top, so that the larger droplets, which have difficulty hydrolyzing, can travel twice through the relative mixer due to the gravitational force. Preferably, both the first and the second SCR have a cylindrical symmetry shape. In the first SCR, the relative mixer duct is central, while the relative SCR matrix is arranged annularly with respect to the relative mixer duct. As regards the second line, the duct of the second mixer is preferably arranged centrally with respect to the matrices of the DOC and the DPF.

The duct of the second mixer ends in front of the matrix of the second SCR.

It is worth highlighting that the CUC, which has the task of oxidizing the ammonia excess that escapes the SCRs is arranged downstream of both the first and the second line.

It could alternatively be integrated into each of the SCRs.

According to another aspect of the invention, the diverter valves DV1, DV2 are replaced by three throttle valves V1, V2, V3. They are not diverter valves: they can only control the flow in a single duct.

Furthermore, such valves are preferably proportional to allow the operating modes described above.

Valve V2 is arranged on line L3b, valve V3 is arranged on line L3a.

Valve V1 is arranged on the second line L2. This fact involves a variation with respect to the diagrams of figures 1 - 4, as the first line is always open. However, all the configurations of figures 2- 4 are realizable, as the closing of valves V2 and V3 involves, in fact, the bypass of the first SCR.

It can therefore be stated that the first SCR can be bypassed, regardless of the valve scheme implemented. Implementation variants to the non-limiting example described are possible, without however departing from the scope of protection of the present invention, including all the equivalent realizations for a technician in the field, to the content of the claims.

From the description reported above, the technician in the field is able to realize the object of the invention without introducing further construction details.

## Claims

1. Pollutant abatement system (ATS) produced comprising in succession, from an entry opening (IN) of exhaust gases and an exit opening (Out) of purified exhaust gases,
- a first SCR selective reduction catalyst (SCR_1),
- a diesel oxidation catalyst (DOC),
- a particulate filter (DPF),
- a second SCR (SCR_2),
- connection means (DV1, V2, V3, L1, L3a, L3b) configured to reversibly bypass the first SCR (SCR_1).

2. System according to claim 1, wherein said first SCR defines a first purification group and the succession of said DOC, DPF and second SCR defines a second purification group, and wherein said connection means are configured to connect the first purification group in parallel to reversibly the second purification group.

3. System according to claim 2, wherein a first volume of the first SCR is smaller than a second volume of the second SCR.

4. System according to claim 3, wherein a total volume given by the sum of the first and second SCR is greater than or equal to a nominal volume calculated to purify a nominal flow of exhaust gases entering the pollutant abatement system and preferably lower than the 120% of the nominal volume.

5. System according to any of the preceding claims, wherein the first SCR is equipped with respective first injection means (DEF1) for injecting a urea-based reducing agent immediately upstream of the first SCR, and wherein the second SCR is equipped with respective second injection means (DEF2) for injecting said urea-based reducing agent immediately upstream of the second SCR.

6. System according to any of the preceding claims, further comprising third injection means (HCJ) to inject a fuel in the abatement system (ATS), arranged immediately upstream of the second purification group.

7. System according to any preceding claim, wherein each of said first and second SCRs is partially provided with an oxidizing coating to define an ammonia neutralizer, or, further comprising an oxidizing catalyst (CUC) disposed downstream of both said first and second purification groups.

8. System according to any preceding claim, wherein at least one of said first and second SCRs comprises a mixer (M1, M2) into which said first and second injection means (DEF1, DEF2) are arranged to inject said urea-based reducing agent, wherein said mixer comprises a tubular element having a vertical development axis, under operating conditions.

9. System according to any of the preceding claims 2 - 8, further comprising processing means (ECU) configured to control said connection means (DV1, V2, V3, L1, L3a, L3b) to arrange said first and second purification groups in series in cold conditions and to bypass said first SCR when a current temperature of the second SCR exceeds a first predetermined temperature threshold and simultaneously a flow of exhaust gas entering the system is lower than a first predetermined flow threshold.

10. System according to claim 9, wherein said processing means (ECU) is further configured to control said connection means (DV1, V2, V3, L1, L3a, L3b) to arrange said first and second purification groups in parallel with each other when said current temperature of the second SCR exceeds said first predetermined threshold and simultaneously said flow of exhaust gas entering the system is greater than said first predetermined flow threshold.

11. System according to claim 10, wherein when said first and second purification groups are arranged in parallel, a distribution of the exhaust gas flow is inversely proportional to respective pressure drop values.

12. System according to claim 9, wherein when the exhaust gas flow entering the system is expected to become greater than said first predetermined flow threshold, then the processing means are configured to connect said first and said second purification groups in parallel with each other, conveying a fraction of exhaust gas in the first SCR, strictly necessary to maintain the first SCR into operating conditions.

13. A system according to any of claims 9 - 12, when dependent on claim 6, wherein said processing means are configured to activate said third injection means when said first and second purification groups are connected to each other in series, so as to accelerate a heating process of the second SCR.
